# EUROPEAN PATENT APPLICATION

(11) **EP 4 683 252 A1**
(43) Date of publication of application: **21.01.2026**
(21) Application number: 24189092.0
(22) Date of filing: 17.07.2024
(51) Int. Cl.: H04L 1/00, G06F 11/16, H04L 1/24, G06F 11/00, G06F 11/10

(54) **PROCESSING SYSTEM AND COMPUTER-IMPLEMENTED METHOD THEREFOR**

(71) Applicant: AImotive Kft., 1025 Budapest (HU)
(72) Inventor: MONOSTORI, Balázs, 1032 Budapest (HU); NAGY, Gyula, H-1114 Budapest (HU); SZÜCS, Imre, H-5420 Túrkeve (HU); VARGA, Márton, H- 1085 Budapest (HU); PÁL, Tamás, H-1164 Budapest (HU)
(74) Representative: Vossius & Partner Patentanwälte Rechtsanwälte mbB

(57) **Abstract**

The present disclosure relates to a processing system, in particular a synchronous digital network, comprising a signal path and a redundancy code path, wherein the redundancy code path is an at least partially redundant path with respect to the signal path, a redundancy code generation unit located in the redundancy code path and configured to generate a redundancy code signal, a delay unit located in the redundancy code path, wherein a delay is applied to the redundancy code signal, and at least one redundancy code determination unit configured to determine a fault in the signal path and/or in the redundancy code path based on an output of the signal path and an output of the redundancy code path. The disclosure also relates to a corresponding method.

## Description

The present disclosure relates to a processing system and a corresponding computer-implemented method. The processing system may in particular be a synchronous digital network.

In recent years, by introducing machine learning/ artificial intelligence methods to electronics of safety critical areas (e.g., automotive, medical, railway, aviation, nuclear, military, etc.), the requirements on computational performance have significantly risen. That is, the recent developments resulted in an increasing demand for the technologically achievable best performance (a.k.a. high-performance computing).

While known and proven in use functional safety practices may still be applicable at a hardware level, their straightforward implementation very often becomes a bottleneck and causes limitations in the computational performance, PPA (performance-power-area) trade-off or manufacturability of a device.

Generating block codes (e.g., Hamming code) for hardware fault detection increases latency when they are applied synchronously with the signal flow. This latency in high-speed designs results in a decrease in the achievable maximum clock frequency. Thus, system performance may be lowered.

To overcome the above limitations, new and/or optimised implementations need to be applied. The present disclosure solves or at least reduces the above drawbacks.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a processing system, in particular a synchronous digital network, comprising a signal path and a redundancy code path, wherein the redundancy code path is an at least partially redundant path with respect to the signal path, a redundancy code generation unit located in the redundancy code path and configured to generate a redundancy code signal, a delay unit located in the redundancy code path, wherein a delay is applied to the redundancy code signal, and at least one redundancy code determination unit configured to determine a fault in the signal path and/or in the redundancy code path based on an output of the signal path and an output of the redundancy code path.

Various embodiments may preferably implement the following features.

Preferably, the redundancy code generation unit is configured to add at least one redundancy code bit and/or a redundancy to the redundancy code path.

Preferably, the redundancy code generation unit is configured to add the at least one redundancy code bit and/or the redundancy at the beginning of the redundancy code path.

Preferably, the at least one redundancy code determination unit is configured to determine the fault based on the at least one redundancy code bit and/or the redundancy at the end of the redundancy code path.

Preferably, the at least one redundancy code determination unit is configured to determine the fault in the signal path and/or in the redundancy code path based on mutual integrity checking of a combination of the signal path and the redundancy code path.

Preferably, the delay is variable or constant. Preferably, the delay of the redundancy code path is known relative to the signal path.

Preferably, the system further comprises a synchronisation unit configured to synchronise the signal path and the redundancy code path.

Preferably, the redundancy code determination unit further comprises a fault signal handling unit configured to output a fault signal.

Preferably, the redundancy code generation unit is provided at a junction of the signal path and the redundancy code path.

Preferably, at least one processing unit is located on the signal path and/ or the redundancy code path.

Preferably, the redundancy code generation unit is located upstream of the at least one processing unit of the redundancy code path, and the redundancy code determination unit is located downstream of the at least one processing unit of the redundancy code path.

Preferably, an input of the signal path is provided as an input of the redundancy code generation unit.

Preferably, the output of the signal path and the output of the redundancy code path are provided as input signals to the redundancy code determination unit.

Preferably, the signal path comprises a multiplexer configured to provide a plurality of signal outputs. Preferably, the redundancy code path comprises a multiplexer configured to provide a plurality of redundancy code outputs corresponding to the plurality of signal outputs. Preferably, the redundancy code determination unit is configured to determine the fault in the plurality of signal outputs and/or in the plurality of redundancy code outputs based on the plurality of signal outputs and the corresponding redundancy code outputs.

Preferably, the redundancy code determination unit comprises a fault signal handling unit configured to output a plurality of fault signals. Preferably, the number of the plurality of fault signals preferably corresponds to the number of the plurality of signal outputs and/or the number of the plurality of redundancy code outputs.

Preferably, the signal path and/or the redundancy code path comprise at least one processing unit. Preferably, the at least one processing unit of the signal path and/or the redundancy code path is at least one of a static random access memory, SRAM, multiplexer, flip-flop, and/or pipeline register.

Preferably, the redundancy code signal is an error detection code, EDC, signal.

The present disclosure further relates to a computer-implemented method for a processing system, in particular a synchronous digital network. The method comprises providing a signal path and a redundancy code path, wherein the redundancy code path is an at least partially redundant path with respect to the signal path, generating, by a redundancy code generation unit located in the redundancy code path, a redundancy code signal, applying, by a delay unit located in the redundancy code path, a delay to the redundancy code signal and determining, by at least redundancy code determination unit, a fault in the signal path and/or in the redundancy code path based on an output of the signal path and an output of the redundancy code path.

Various embodiments may preferably implement the following features.

Preferably, the method further comprises adding, by the redundancy code generation unit, at least one redundancy code bit and/or a redundancy to the redundancy code path.

Preferably, the at least one redundancy code bit and/or the redundancy is added at the beginning of the redundancy code path.

Preferably, the method further comprises determining, by the at least one redundancy code determination unit, the fault based on the at least one redundancy code bit and/or the redundancy at the end of the redundancy code path.

Preferably, the method further comprises determining, by the at least one redundancy code determination unit, the fault in the signal path and/or the redundancy code path based on mutual integrity checking of a combination of the signal path and the redundancy code path.

Preferably, the delay is variable or constant. Preferably, the delay of the redundancy code path is known relative to the signal path.

Preferably, the method further comprises synchronising, by a synchronisation unit, the signal path and the redundancy code path.

Preferably, the method further comprises outputting, by a fault signal handling unit of the redundancy code determination unit, the fault signal.

Preferably, the method further comprises providing the redundancy code generation unit at a junction of the signal path and the redundancy code path.

Preferably, the method further comprises providing at least one processing unit on the signal path and/or the redundancy code path.

Preferably, the method further comprises providing the redundancy code generation unit upstream of at least one processing unit located in the redundancy code path. Preferably, the method further comprises providing the redundancy code determination unit downstream of the at least one processing unit located in the redundancy code path.

Preferably, the method further comprises providing an input of the signal path as an input of the redundancy code generation unit.

Preferably, the method further comprises providing the output of the signal path and the output of the redundancy code path as input signals to the redundancy code determination unit.

Preferably, the method further comprises providing a multiplexer in the signal path, wherein the multiplexer is configured to provide a plurality of signal outputs. Preferably, the method further comprises providing a multiplexer in the redundancy code path, wherein the multiplexer is configured to provide a plurality of redundancy code outputs corresponding to the plurality of signal outputs. Preferably, the method further comprises determining, by the redundancy code determination unit, the fault in the plurality of signal outputs and/or in the plurality of redundancy code outputs based on the plurality of signal outputs and the corresponding redundancy code outputs.

Preferably, the method further comprises outputting, by a fault signal handling unit of the redundancy code determination unit, a plurality of fault signals, wherein the number of the plurality of fault signals preferably corresponds to the number of the plurality of signal outputs and/or the number of the plurality of redundancy code outputs.

Preferably, the method further comprises providing at least one processing unit in the signal path and/or the redundancy code path, wherein preferably, the at least one processing unit of the signal path and/or the redundancy code path is at least one of a static random access memory, SRAM, multiplexer, flip-flop, and/or pipeline register.

Preferably, the redundancy code signal is an error detection code, EDC, signal.

Other aspects, features, and advantages will be apparent from the summary above, as well as from the description that follows, including the figures and the claims.

The proposed solution forms an optimal implementation for hardware fault detection in signal paths and/or redundancy code path containing memories (e.g., SRAM), multiplexers, pipeline registers, etc., including wire connections, as well.

The present disclosure implements some or all of the below features and advantages.

In an embodiment, separate hardware elements for generating and checking block codes (redundancy code, e.g., error detection code, EDC) may be implemented. This approach may provide intrinsic fault detection ability for the fault detection circuitry (acting as a safety mechanism).

The redundancy code (e.g., EDC) may be generated at an early or the earliest point in the design where a new signal is produced, and checked close to or at the end of the signal path where the signal is consumed (i.e., changed).

The signal path may not be blocked, while the redundancy code path may have a (variable/constant) delay of a few clock cycles in the entire signal path which is protected by the redundancy code.

The signal path and redundancy code path may be synchronised and controlled by a signal flow control. That is, if a signal flow is held up, the redundancy code flow may also be delayed.

In an embodiment, each memory, multiplexer, and register in the signal path is built up from two physical instances. This may increase the fault detection ability, resulting in a higher achievable diagnostic coverage. E.g., this may also cover faults in an internal logic of the multiplexers, internal address and control logic of the SRAMs.

For applications where error detection is enough (i.e., no need for error correction ability), the presented solution offers an elegant way to reach the maximum achievable clock frequency and throughput. And at the same time, it may also increase the hardware fault detection effectiveness (diagnostic coverage) for both single- and multiple-point faults.

Thus, this solution may transform a computational speed requirement of the redundancy code into a redundancy code path delay.

Embodiments of the present disclosure will now be described by way of example only and with reference to the following accompanying drawings. In the figures, the same reference numerals denote the same or similar elements.
Fig. 1 shows a signal path according to the state of the art.
Fig. 2 shows a signal path with duplicated elements according to the state of the art.
Fig. 3 shows a signal path according to an embodiment of the present disclosure.
Fig. 4 shows multiple signal paths according to an embodiment of the present disclosure.
Fig. 5 shows a block diagram of a processing system according to an embodiment of the present disclosure.
Fig. 6 shows a flow chart of a method according to an embodiment of the present disclosure.

In the following, the terms error and fault may be used synonymously.

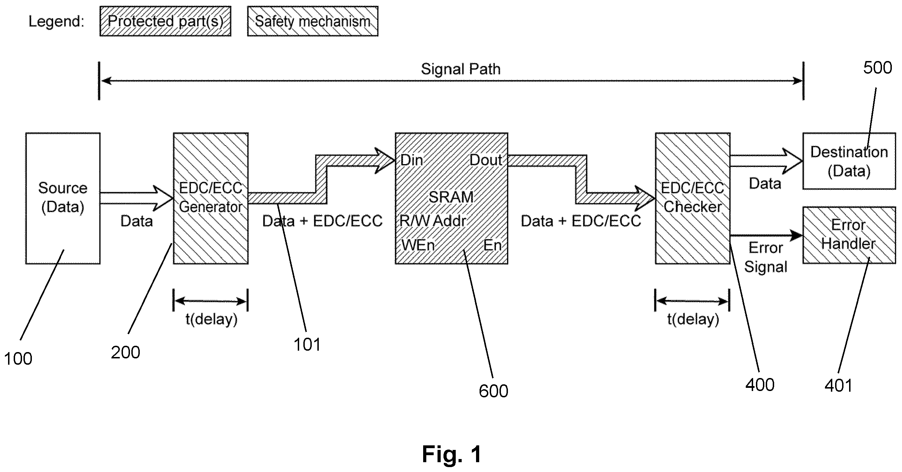

In Figs. 1-4, an input of a processing unit is denoted by Din while an output of a processing unit is denoted by Dout. WEn and En indicate control signal ports. R/W Addr refers to read/write address. The shown signals are not to be viewed as limiting and the processing units may also have more or less connections/signals/inputs/outputs.

In Fig. 1, a signal path according to the state of the art is shown. The signal path 101 utilises an error detection code (EDC) and error correction code (ECC) mechanism to secure the signal path 101. In particular, the signal coming from a data/signal source 100 is fed into and EDC/ECC generator 200. The EDC/ECC generator may apply a delay to the EDC/ECC signal. The signal path 101 then carries both the data signal as well as the EDC/ECC signal to a processing unit 600. Subsequently, the data signal and the EDC/ECC signal are checked in an EDC/ECC checker 400 whether any inconsistencies between the received data signal and the EDC/ECC signal are present. In the affirmative, an error handler 401 takes necessary steps. The data signal is output to its destination 500.

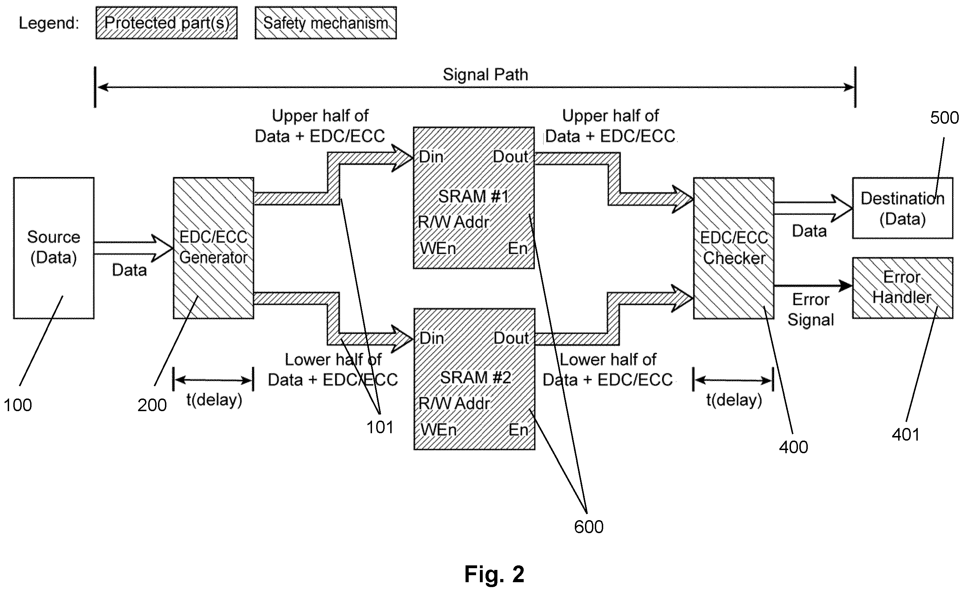

Fig. 2 shows another configuration according to the state of the art in which redundant signal paths 101 are provided. The principle remains as in Fig. 1. A data signal coming from a source 100 is fed into an EDC/ECC generator 200 and the data is split into two parallel signal paths 101 carrying (respective parts of) the data signal and the EDC/ECC signal to processing units 600. The signal paths 101 are then fed into an EDC/ECC checker 400 which, as described above, determines whether there are any inconsistencies in the signal path 101.

However, the current error detection architectures often increase latency of the signal flow and / or results in an extensive compromise on the PPA ratio. In view of the problems as also outlined above, the present disclosure presents an improved fault detection mechanism which will be described below.

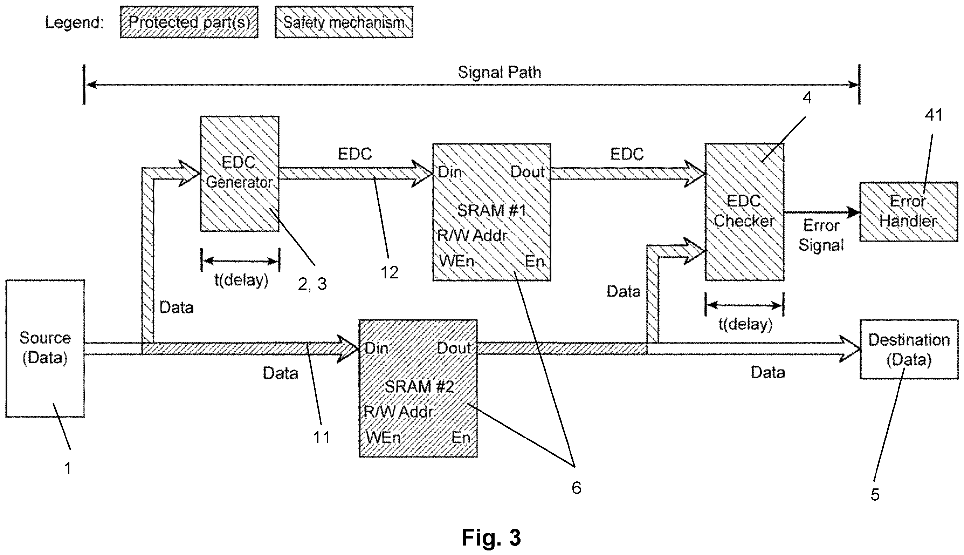

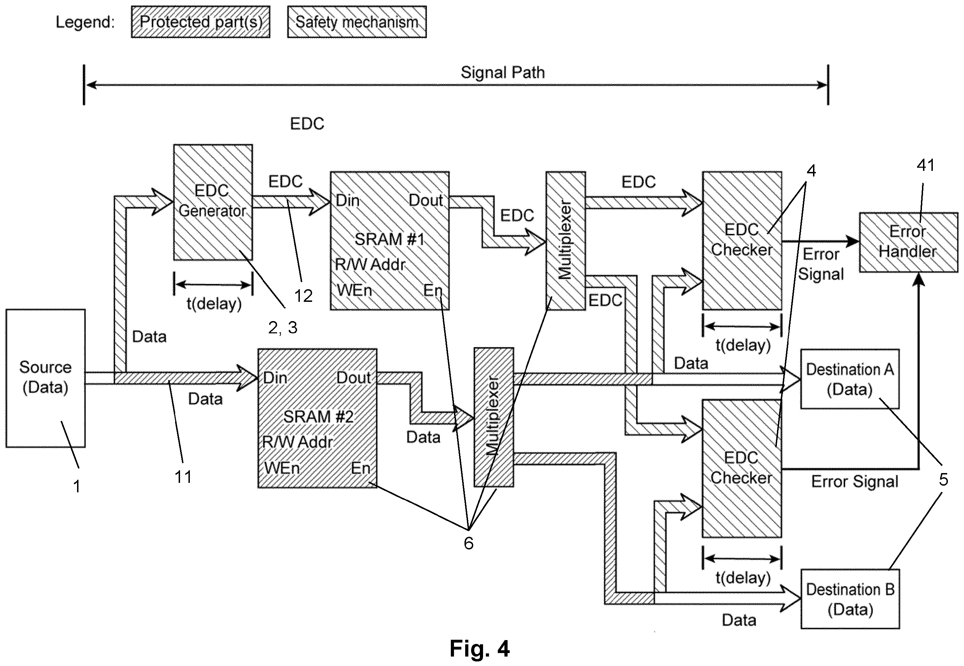

Fig. 3 shows a signal flow according to an embodiment of the present disclosure. It is to be noted that Figs. 3 and 4 show exemplary configurations and are not to be viewed as restricting. Implementations according to the present disclosure may comprise more or less elements than depicted in Figs. 3 or 4 without altering the underlying principle of the disclosure.

As shown in Fig. 3, a signal, e.g., a data signal, may be provided from a signal source 1. Said signal then propagates through a signal path 11 and is simultaneously fed, via a redundancy code path 12, into a redundancy code generation unit 2. The redundancy code generation unit 2 may be, e.g., an EDC generator but is not limited to this specific configuration. Moreover, the redundancy code path 12 may comprise a delay element/delay unit 3 applying a delay to the redundant signal on the redundancy code path 12. The delay unit 3 may be integrated into the redundancy code generation unit 2 or may be provided as a separate entity. Both the signal path 11 and the redundancy code path 12 may be fed into a processing unit 6. The processing unit 6 may be, e.g., at least one of a static random access memory, SRAM, multiplexer, flip-flop, and/or pipeline register. In the example of Fig. 3, the processing unit 6 is a SRAM but the present disclosure is not limited to this configuration.

In an embodiment, each processing unit 6 is built up from two physical instances running in parallel, one fed by the signal path 11 and one fed by the redundancy code path 12. Alternatively, two identical processing units may be provided for the signal path 11 and the redundancy code path 12, respectively. This allows increasing the fault detection ability, resulting in a higher achievable diagnostic coverage. For example, this may also cover faults in the internal logic of the multiplexers, internal address and control logic of the SRAMs.

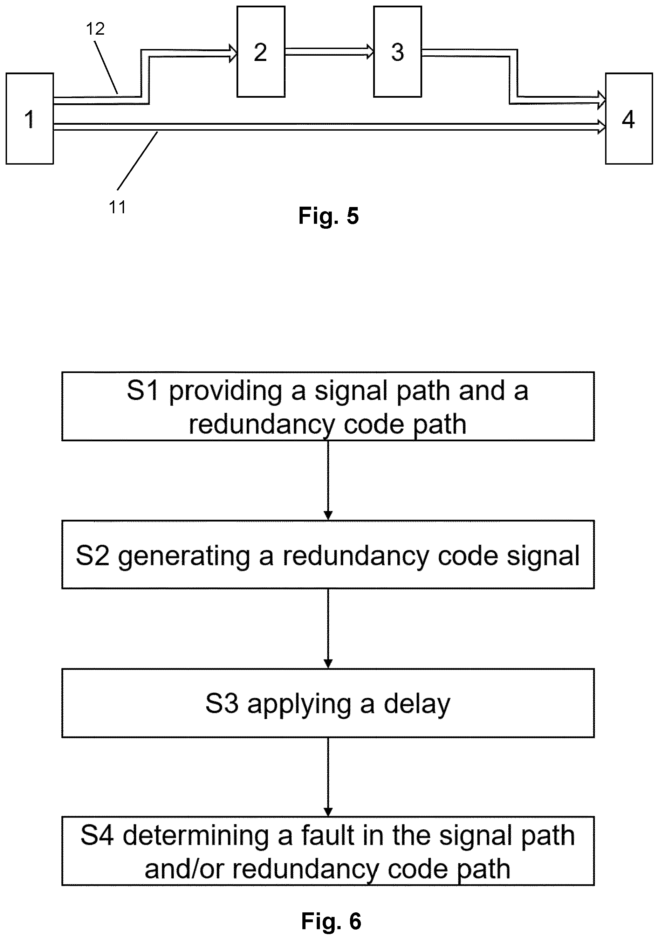

Another alternative is that the two processing units differ. This may be an advantageous solution, when the processing unit in the redundancy code path has the same delay as the one in the signal path given that the redundancy code continues to match the signal. In this aspect reference is also made to Figure 5.

The processed signals are subsequently provided to a redundancy code determination unit 4 via the signal path 11 and the redundancy code path 12, respectively. The signal is output to its destination/to an output 5 via the signal path 11.

The redundancy code determination unit 4 checks whether there are inconsistencies between the signal of the signal path 11 and the redundancy code path 12. In the affirmative, an error signal is output and forwarded to an error handler 41. The redundancy code determination unit 4 may also comprise a delay unit 3.

Fig. 4 shows a signal flow according to an embodiment of the present disclosure, wherein multiple signal paths 11 are provided. The functional principle is the same as described above in the context of Fig. 3. That is, a signal coming from a source 1 propagates by a signal path 11 and a redundancy code path 12 comprising a redundancy code generation unit 2 and a delay unit 3 to respective processing units 6. In addition to the configuration of Fig. 3, both the signal path 11 and the redundancy code path 12 comprise respective multiplexers 6 having multiple outputs (two outputs each according to the example of Fig. 4).

Each pair of outputs is then fed to respective redundancy code determination units 4 for checking the respective signal path 11 and redundancy code path 12. As described above, an error signal may be generated in case of inconsistencies which is then forwarded to an error handler 41.

The signal paths 11 are output to their respective destinations 5.

In Figs. 3 and 4, the signal path(s) 11 comprise(s) protected part(s), i.e., the part(s) to be protected, while the redundancy code path(s) 12 constitute(s) the safety mechanism for the signal path(s) 11.

Fig. 5 shows a basic configuration according to an embodiment of the present disclosure. The configuration of Fig. 5 is fully compatible with the above description of Figs. 3 and 4 and certain elements of the figures and description may be combined or omitted without further modifications. Moreover, the terms signal/signal path as well as redundancy code signal/redundancy code path may be used interchangeably.

In particular, Fig. 5 shows a processing system, for example a synchronous digital network, comprising a signal path 11 and a redundancy code path 12. The redundancy code path 12 is, with respect to the signal path 11, at least partially redundant. That is, the redundancy code path 12 may be a duplicate or partial duplicate of the signal path 11.

The processing system further comprises a redundancy code generation unit 2 located in the redundancy code path 12 and configured to generate a redundancy code signal, and further comprises a delay unit 3 located in the redundancy code path 12. A delay is applied to the redundancy code signal. As noted above, the delay unit 3 may be integrated into the redundancy code generation unit 2. That is, the redundancy code generation unit 2 may generate the redundant code signal for the redundancy code path 12 having a delay. The delay may be, e.g., one or more clock cycles.

The processing system also comprises at least one redundancy code determination unit 4 configured to determine a fault in the signal path 11 and/or in the redundancy code path 12 based on an output of the signal path 11 and an output of the redundancy code path 12.

The input signal, e.g., a data signal, may be provided from a source 1.

In an embodiment, the redundancy code generation unit 2 is configured to add at least one redundancy code bit and/or a redundancy to the redundancy code path 12 (or the redundancy code signal, respectively).

In an embodiment, the redundancy code generation unit 2 is configured to add the at least one redundancy code bit and/or the redundancy at the beginning of the redundancy code path 12.

In an embodiment, the at least one redundancy code determination unit 4 is configured to determine the fault based on the at least one redundancy code bit and/or the redundancy at the end of the redundancy code path 12.

In an embodiment, the at least one redundancy code determination unit 4 is configured to determine the fault in the signal path 11 and/or in the redundancy code path 12 based on mutual integrity checking of a combination of the signal path 11 and the redundancy code path 12.

In an embodiment, the delay is variable or constant. The delay of the redundancy code path 12 may be known relative to the signal path 11. That is, the time difference between the redundancy code path 12 and the signal path 11 may be known.

In an embodiment, the system further comprises a synchronisation unit (not shown) configured to synchronise the signal path 11 and the redundancy code path 12.

In an embodiment, the redundancy code determination unit 4 further comprises a fault signal handling unit 41 configured to output a fault signal.

In an embodiment, the redundancy code generation unit 2 is provided at a junction of the signal path 11 and the redundancy code path 12.

In an embodiment, at least one processing unit 6 is located on the signal path 11 and/ or the redundancy code path 12.

In an embodiment, the redundancy code generation unit 2 is located upstream of the at least one processing unit 6 of the redundancy code path 12, and the redundancy code determination unit 4 is located downstream of the at least one processing unit 6 of the redundancy code path 12.

In an embodiment, an input of the signal path 11 is provided as an input of the redundancy code generation unit 2.

In an embodiment, the output of the signal path 11 and the output of the redundancy code path 12 are provided as input signals to the redundancy code determination unit 4.

In an embodiment, the signal path 11 comprises a multiplexer 6 configured to provide a plurality of signal outputs. In an embodiment, the redundancy code path 12 comprises a multiplexer 6 configured to provide a plurality of redundancy code outputs corresponding to the plurality of signal outputs. The multiplexer 6 of the signal path 11 and/or the redundancy code path 12 may correspond to at least one processing unit 6 or may be provided in addition to another processing unit 6.

In an embodiment, the redundancy code determination unit 4 is configured to determine the fault in the plurality of signal outputs and/or in the plurality of redundancy code outputs based on the plurality of signal outputs and the corresponding redundancy code outputs.

In an embodiment, the redundancy code determination unit 4 comprises a fault signal handling unit configured to output a plurality of fault signals. In an embodiment, the number of the plurality of fault signals may correspond to the number of the plurality of signal outputs and/or the number of the plurality of redundancy code outputs.

In an embodiment, the signal path 11 and/or the redundancy code path 12 comprise at least one processing unit 6. In an embodiment, the at least one processing unit 6 of the signal path 11 and/or the redundancy code path 12 is at least one of a static random access memory, SRAM, multiplexer, flip-flop, and/or pipeline register.

In an embodiment, the redundancy code signal is an error detection code, EDC, signal. As noted above, other means of redundancy such as a redundancy bit, duplicated signal, etc. may also be used.

The present disclosure also relates to a corresponding computer-implemented method for a processing system, in particular a synchronous digital network. The method comprises, as shown in Fig. 6, providing S1 a signal path 11 and a redundancy code path 12, wherein the redundancy code path 12 is an at least partially redundant path with respect to the signal path 11, generating S2, by a redundancy code generation unit 2 located in the redundancy code path 12, a redundancy code signal, applying S3, by a delay unit 3 located in the redundancy code path 12, a delay to the redundancy code signal and determining S4, by at least redundancy code determination unit 4, a fault in the signal path 11 and/or in the redundancy code path 12 based on an output of the signal path 11 and an output of the redundancy code path 12.

In an embodiment, the method further comprises adding, by the redundancy code generation unit 2, at least one redundancy code bit and/or a redundancy to the redundancy code path 12.

In an embodiment, the at least one redundancy code bit and/or the redundancy is added at the beginning of the redundancy code path 12.

In an embodiment, the method further comprises determining, by the at least one redundancy code determination unit 4, the fault based on the at least one redundancy code bit and/or the redundancy at the end of the redundancy code path 12.

In an embodiment, the method further comprises determining, by the at least one redundancy code determination unit 4, the fault in the signal path 11 and/or the redundancy code path 12 based on mutual integrity checking of a combination of the signal path 11 and the redundancy code path 12.

In an embodiment, the delay is variable or constant. In an embodiment, the delay of the redundancy code path 12 is known relative to the signal path 11.

In an embodiment, the method further comprises synchronising, by a synchronisation unit, the signal path 11 and the redundancy code path 12.

In an embodiment, the method further comprises outputting, by a fault signal handling unit 41 of the redundancy code determination unit 4, the fault signal.

In an embodiment, the method further comprises providing the redundancy code generation unit 2 at a junction of the signal path 11 and the redundancy code path 12.

In an embodiment, the method further comprises providing at least one processing unit 6 on the signal path 11 and/or the redundancy code path 12.

In an embodiment, the method further comprises providing the redundancy code generation unit 2 upstream of at least one processing unit 6 located in the redundancy code path 12. In an embodiment, the method further comprises providing the redundancy code determination unit 4 downstream of the at least one processing unit 6 located in the redundancy code path 12.

In an embodiment, the method further comprises providing an input of the signal path 11 as an input of the redundancy code generation unit 2.

In an embodiment, the method further comprises providing the output of the signal path 11 and the output of the redundancy code path 12 as input signals to the redundancy code determination unit 4.

In an embodiment, the method further comprises providing a multiplexer 6 in the signal path 11, wherein the multiplexer 6 is configured to provide a plurality of signal outputs. In an embodiment, the method further comprises providing a multiplexer 6 in the redundancy code path 12, wherein the multiplexer 6 is configured to provide a plurality of redundancy code outputs corresponding to the plurality of signal outputs. In an embodiment, the method further comprises determining, by the redundancy code determination unit 4, the fault in the plurality of signal outputs and/or in the plurality of redundancy code outputs based on the plurality of signal outputs and the corresponding redundancy code outputs.

In an embodiment, the method further comprises outputting, by a fault signal handling unit 41 of the redundancy code determination unit 4, a plurality of fault signals. The number of the plurality of fault signals may correspond to the number of the plurality of signal outputs and/or the number of the plurality of redundancy code outputs.

In an embodiment, the method further comprises providing at least one processing unit 6 in the signal path 11 and/or the redundancy code path 12. The at least one processing unit 6 of the signal path 11 and/or the redundancy code path 12 may be at least one of a static random access memory, SRAM, multiplexer, flip-flop, and/or pipeline register.

In an embodiment, the redundancy code signal is an error detection code, EDC, signal.

The proposed solution forms an optimal implementation for hardware fault detection in signal paths containing memories (e.g., SRAM), multiplexers, pipeline registers, etc., including wire connections, as well.

In particular, by implementing separate hardware elements for generating and checking block codes (redundancy code, e.g., error detection code, EDC), an intrinsic fault detection ability for the fault detection circuitry acting as a safety mechanism may be provided. The redundancy code (e.g., EDC) may be generated at an early or the earliest point in the design where a new signal is produced, and checked close to or at the end of the signal path where the signal is consumed (i.e., changed). Thus, the signal path may not be blocked, while the redundancy code path may have a (variable/constant) delay of a few clock cycles in the entire signal path which is protected by the redundancy code.

The signal path and redundancy code path may be synchronised and controlled by a signal flow control. That is, if a signal flow is held up, the redundancy code flow may also be delayed. In some implementations, each memory, multiplexer, and register in the signal path is built up from two physical instances to increase the fault detection ability, resulting in a higher achievable diagnostic coverage. E.g., this may also cover faults in an internal logic of the multiplexers, internal address and control logic of the SRAMs.

For applications where error detection is enough (i.e., no need for error correction ability), the presented solution offers an elegant way to reach the maximum achievable clock frequency and throughput. And at the same time, it may also increase the hardware fault detection effectiveness (diagnostic coverage) for both single- and multiple-point faults.

Thus, an improved and efficient system and method for error detection is provided that is capable of introducing only minor latencies to the overall signal processing.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organisation.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

### List of reference signs

- 1: signal source
- 11: signal path
- 12: redundancy code path
- 2: redundancy code generation unit
- 3: delay unit/delay element
- 4: redundancy code determination unit
- 41: fault handling unit/fault signal handling unit/error handler
- 5: output/signal destination/data destination
- 6: processing unit/memory/multiplexer/flip-flop/pipeline register
- 100: signal source
- 101: signal path
- 200: EDC/ECC generator
- 400: EDC/ECC checker
- 401: error handler
- 500: output/signal destination/data destination
- 600: processing unit/memory

## Claims

1. Processing system, in particular a synchronous digital network, comprising:
a signal path (11) and a redundancy code path (12), wherein the redundancy code path (12) is an at least partially redundant path with respect to the signal path (11),
a redundancy code generation unit (2) located in the redundancy code path (12) and configured to generate a redundancy code signal,
a delay unit (3) located in the redundancy code path (12), wherein a delay is applied to the redundancy code signal, and
at least one redundancy code determination unit (4) configured to determine a fault in the signal path (11) and/or in the redundancy code path (12) based on an output of the signal path (11) and an output of the redundancy code path (12).

2. Processing system according to claim 1, wherein the redundancy code generation unit (2) is configured to add at least one redundancy code bit and/or a redundancy to the redundancy code path (12),
wherein preferably, the redundancy code generation unit (2) is configured to add the at least one redundancy code bit and/or the redundancy at the beginning of the redundancy code path (12).

3. Processing system according to claim 2, wherein the at least one redundancy code determination unit (4) is configured to determine the fault based on the at least one redundancy code bit and/or the redundancy at the end of the redundancy code path (12).

4. Processing system according to any one of claims 1 to 3, wherein the at least one redundancy code determination unit (4) is configured to determine the fault in the signal path (11) and/or in the redundancy code path (12) based on mutual integrity checking of a combination of the signal path (11) and the redundancy code path (12).

5. Processing system according to any one of claims 1 to 4, wherein the delay is variable or constant, and
wherein preferably, the delay of the redundancy code path (12) is known relative to the signal path (11).

6. Processing system according to any one of claims 1 to 5, further comprising a synchronisation unit configured to synchronise the signal path (11) and the redundancy code path (12).

7. Processing system according to any one of claims 1 to 6, wherein the redundancy code generation unit (2) is provided at a junction of the signal path (11) and the redundancy code path (12).

8. Processing system according to any one of claims 1 to 7, wherein at least one processing unit (6) is located on the signal path (11) and/ or the redundancy code path (12),
wherein preferably, the redundancy code generation unit (2) is located upstream of the at least one processing unit (6) of the redundancy code path (12), and the redundancy code determination unit (4) is located downstream of the at least one processing unit (6) of the redundancy code path (12), and/or
wherein an input of the signal path (11) is provided as an input of the redundancy code generation unit (2).

9. Processing system according to any one of claims 1 to 8, wherein the output of the signal path (11) and the output of the redundancy code path (12) are provided as input signals to the redundancy code determination unit (4).

10. Processing system according to any one of claims 1 to 9, wherein the signal path (11) comprises a multiplexer (6) configured to provide a plurality of signal outputs,
wherein the redundancy code path (12) comprises a multiplexer (6) configured to provide a plurality of redundancy code outputs corresponding to the plurality of signal outputs, and
wherein the redundancy code determination unit (4) is configured to determine the fault in the plurality of signal outputs and/or in the plurality of redundancy code outputs based on the plurality of signal outputs and the corresponding redundancy code outputs.

11. Processing system according to claim 10, wherein the redundancy code determination unit (4) comprises a fault signal handling unit (41) configured to output a plurality of fault signals, wherein the number of the plurality of fault signals preferably corresponds to the number of the plurality of signal outputs and/or the number of the plurality of redundancy code outputs.

12. Processing system according to any one of claims 1 to 11, wherein the signal path (11) and/or the redundancy code path (12) comprise at least one processing unit (6), wherein preferably, the at least one processing unit (6) of the signal path (11) and/or the redundancy code path (12) is at least one of a static random access memory, SRAM, multiplexer, flip-flop, and/or pipeline register.

13. Processing system according to any one of claims 1 to 12, wherein the redundancy code signal is an error detection code, EDC, signal.

14. Computer-implemented method for a processing system, in particular a synchronous digital network, comprising:
providing a signal path (11) and a redundancy code path (12), wherein the redundancy code path (12) is an at least partially redundant path with respect to the signal path (11),
generating, by a redundancy code generation unit (2) located in the redundancy code path (12), a redundancy code signal,
applying, by a delay unit (3) located in the redundancy code path (12), a delay to the redundancy code signal, and
determining, by at least redundancy code determination unit (4), a fault in the signal path (11) and/or in the redundancy code path (12) based on an output of the signal path (11) and an output of the redundancy code path (12).

15. Method according to claim 14, wherein the method further comprises implementing the system according to one of claims 2 to 13.
